# EUROPÄISCHE PATENTANMELDUNG

(11) **EP 4 279 343 A1**
(43) Veröffentlichungstag der Anmeldung: **22.11.2023**
(21) Anmeldenummer: 23172391.7
(22) Anmeldetag: 09.05.2023
(51) Int. Cl.: B60S 3/00

(54) **TROCKNUNGSVORRICHTUNG FÜR EINE FAHRZEUGBEHANDLUNGSANLAGE UND FAHRZEUGBEHANDLUNGSANLAGE MIT EINER TROCKNUNGSVORRICHTUNG**

(30) Priorität: 17.05.2022 DE 102022112389
(71) Anmelder: Alfred Kärcher SE & Co. KG, 71364 Winnenden (DE)
(72) Erfinder: Seybold, Florian, 71364 Winnenden (DE); Veitz, Yann, 71364 Winnenden (DE); Speckmaier, André, 71364 Winnenden (DE); Heid, Claus, 71364 Winnenden (DE)
(74) Vertreter: DTS Patent- und Rechtsanwälte Schnekenbühl und Partner mbB

(57) **Zusammenfassung**

Die vorliegende Erfindung betrifft eine Trocknungsvorrichtung für eine Fahrzeugbehandlungsanlage (100), insbesondere eine Dachtrocknungsvorrichtung (126, 230), umfassend mindestens eine Gebläseeinrichtung (138) zum Bereitstellen von Trocknungsluft und eine Düseneinrichtung, die mindestens einen Düsenkörper (140) umfasst, wobei der mindestens eine Düsenkörper (140) längserstreckt ausgebildet und mit der mindestens einen Gebläseeinrichtung (138) strömungsverbunden ist, einen Strömungskanal (166) und eine schlitzförmige Auslassöffnung (168) für Trocknungsluft umfasst, wobei der mindestens eine Düsenkörper (140) ein der Auslassöffnung (168) in Zuströmrichtung der von der mindestens einen Gebläseeinrichtung (138) zuströmenden Trocknungsluft vorgelagertes Strömungsumlenkelement (186) umfasst oder ausbildet, über das die Trocknungsluft an der der Auslassöffnung (168) zugewandten Seite des Strömungskanals (166) in einer von einer Ebene der Auslassöffnung (168) weg weisenden Richtung umgelenkt und anschließend wieder auf die Auslassöffnung (168) zu umgelenkt wird. Außerdem betrifft die Erfindung eine Fahrzeugbehandlungsanlage (100).

## Beschreibung

Die vorliegende Erfindung betrifft eine Trocknungsvorrichtung für eine Fahrzeugbehandlungsanlage, insbesondere eine Dachtrocknungsvorrichtung, umfassend mindestens eine Gebläseeinrichtung zum Bereitstellen von Trocknungsluft und eine Düseneinrichtung, die mindestens einen Düsenkörper umfasst, wobei der mindestens eine Düsenkörper längserstreckt ausgebildet und mit der mindestens einen Gebläseeinrichtung strömungsverbunden ist, einen Strömungskanal und eine schlitzförmige Auslassöffnung für Trocknungsluft umfasst.

Darüber hinaus betrifft die vorliegende Erfindung eine Fahrzeugbehandlungsanlage, insbesondere eine Fahrzeugwaschanlage, die eine Trocknungsvorrichtung der vorstehend beschriebenen Art umfasst. Die Trocknungsvorrichtung ist insbesondere eine Dachtrocknungsvorrichtung. Die Fahrzeugbehandlungsanlage kann zum Beispiel eine Portalanlage sein, die relativ zu einem stationären Fahrzeug verfahren wird, oder eine stationäre Anlage, an der das Fahrzeug mit einer Fördervorrichtung transportiert wird.

Dachtrocknungsvorrichtungen sind beispielsweise in der KR 10076915 B1, der JP 2007/022433 A und in der EP 0879744 A2 beschrieben. Hierbei wird über die mindestens eine Gebläseeinrichtung jeweils Trocknungsluft bereitgestellt, die über die Auslassöffnung des mindestens einen Düsenkörpers in Richtung auf das Fahrzeug ausgeblasen wird, um Reinigungsflüssigkeit abzublasen und dadurch das Fahrzeug zu trocknen.

Zur Erzielung einer hohen Strömungsgeschwindigkeit ist es bekannt, dass die Auslassöffnung schlitzförmig ist. Dies dient zum Beispiel auch dazu, einen "Vorhang" einer Trocknungsluft mit gerichteter Strömung über die Fahrzeugoberfläche hinweg zu erzeugen. Bekannt ist es, die Dachtrocknungsvorrichtung zum Abtrocknen obenliegender Bereiche des Fahrzeugs einzusetzen sowie zum Abblasen der Fahrzeugfront und des Fahrzeughecks. Zur Anpassung an die Kontur des Fahrzeugs kann die Fahrzeugbehandlungsanlage eine Hubeinrichtung für die Höhenverstellung der Trocknungsvorrichtung umfassen.

Aufgabe der vorliegenden Erfindung ist es, eine Trocknungsvorrichtung der eingangs genannten Art und eine Fahrzeugbehandlungsanlage mit einer derartigen Trocknungsvorrichtung bereitzustellen, wobei über die Trocknungsvorrichtung ein verbessertes Trocknungsergebnis erzielbar ist.

Diese Aufgabe wird bei einer gattungsgemäßen Trocknungsvorrichtung erfindungsgemäß dadurch gelöst, dass der mindestens eine Düsenkörper ein der Auslassöffnung in Zuströmrichtung der von der mindestens einen Gebläseeinrichtung zuströmenden Trocknungsluft vorgelagertes Strömungsumlenkelement umfasst oder ausbildet, über das die Trocknungsluft an der der Auslassöffnung zugewandten Seite des Strömungskanals in einer von einer Ebene der Auslassöffnung wegweisenden Richtung umgelenkt und anschließend wieder auf die Auslassöffnung zu umgelenkt wird.

Bei der erfindungsgemäßen Trocknungsvorrichtung strömt die Trocknungsluft von der Gebläseeinrichtung am Strömungsumlenkelement vorbei in Richtung der Auslassöffnung. Einströmende Trocknungsluft wird in einer Richtung abgelenkt, die von der von der Auslassöffnung definierten Ebene weg weist. Es versteht sich, dass die Trocknungsluft am Strömungsumlenkelement längs des Strömungskanals weiter in Richtung der Auslassöffnung strömt. Die Trocknungsluft erfährt eine weitere Umlenkung, in Richtung auf die Auslassöffnung und insbesondere die Ebene der Auslassöffnung. In der Praxis zeigt sich, dass infolge der Umlenkung der Trocknungsluft zunächst nach oben und anschließend wieder nach unten auf die Auslassöffnung eine Durchströmung der Auslassöffnung erzielt werden kann, bei der die Trocknungsluft vorzugsweise senkrecht oder im Wesentlichen senkrecht zur Ebene aus der Auslassöffnung ausströmt. Das sich dadurch ergebende Strömungsbild von Trocknungsluft erweist sich als vorteilhaft für ein gutes Trocknungsergebnis.

Bei einer konstruktiv einfachen Ausgestaltung der Trocknungsvorrichtung ist das Strömungsumlenkelement vorteilhafterweise durch eine Wandung des Düsenkörpers ausgebildet. Ein separates Strömungsumlenkelement kann dadurch eingespart werden. Beispielsweise formt die Wandung des Düsenkörpers, der aus einem Kunststoffmaterial gefertigt sein kann, das Strömungsumlenkelement aus.

Das Strömungsumlenkelement ist vorteilhafterweise in Strömungsrichtung der Trocknungsluft der Auslassöffnung unmittelbar vorgelagert angeordnet.

Vorgesehen sein kann, dass das Strömungsumlenkelement unmittelbar angrenzend an die mindestens eine Gebläseeinrichtung positioniert ist.

Das Strömungsumlenkelement kann beispielsweise eingangsseitig am mindestens einen Düsenkörper angeordnet sein.

Als vorteilhaft kann es sich erweisen, wenn das Strömungsumlenkelement, insbesondere eine Wandung des mindestens einen Düsenkörpers, an einer der Auslassöffnung zugewandten Seite bogenförmig weg von der Ebene der Auslassöffnung und anschließend in Richtung auf die Auslassöffnung verläuft. Bezogen auf einen Querschnitt des Düsenkörpers in dessen Längsrichtung ist das Strömungsumlenkelement hierbei insbesondere bogenförmig ausgebildet.

In entsprechender Weise kann vorgesehen sein, dass das Strömungsumlenkelement, insbesondere eine Wandung des Düsenkörpers, an einer der Auslassöffnung abgewandten Seite bogenförmig weg von der Ebene der Auslassöffnung und anschließend in Richtung auf die Auslassöffnung verläuft. Auch bei dieser Ausführungsform ist das Strömungsumlenkelement bezogen auf einen Querschnitt in Längsrichtung des Düsenkörpers an der der Auslassöffnung abgewandten Seite insbesondere bogenförmig.

Vorteilhaft kann es sein, wenn der Querschnitt des Strömungskanals (quer zur Strömungsrichtung der Trocknungsluft) im Bereich des Strömungsumlenkelementes konstant oder im Wesentlichen konstant ist.

Der mindestens eine Düsenkörper kann insbesondere getrennt von der mindestens einen Gebläseeinrichtung gebildet und mit dieser verbunden sein.

Die mindestens eine Gebläseeinrichtung bildet bei einer bevorzugten Ausführungsform der Erfindung ein Anschlusselement aus, oder ein Anschlusselement des ausgangsseitig einer mindestens einen Gebläseeinrichtung angeordnet, mit dem der Düsenkörper in Eingriff steht. Das Anschlusselement kann zum Beispiel als Anschlussstutzen an der oder der Gebläseeinrichtung ausgebildet sein. Über das Anschlusselement ist der mindestens eine Düsenkörper direkt oder indirekt mit der mindestens einen Gebläseeinrichtung verbunden.

Als vorteilhaft kann es sich erweisen, wenn das Anschlusselement und der mindestens eine Düsenkörper einen runden und insbesondere kreisrunden Querschnitt aufweisen, wobei der mindestens eine Düsenkörper das Anschlusselement übergreift, oder umgekehrt. Hierbei stehen das Anschlusselement und der mindestens eine Düsenkörper vorteilhafterweise formschlüssig in Eingriff. Der mindestens eine Düsenkörper kann vorzugsweise relativ zum Anschlusselement drehbar ausgebildet sein, so dass dieses eine Drehdurchführung für den Fall eines drehbaren Düsenkörpers ausbildet. Auf eine Drehung des Düsenkörpers wird nachfolgend noch eingegangen.

Der mindestens eine Düsenkörper kann zum Beispiel in sich von der mindestens einen Gebläseeinrichtung wegweisender Richtung einen den Strömungskanal einfassenden Führungsabschnitt und einen vom Führungsabschnitt abstehenden Auslassabschnitt umfassen, der die Auslassöffnung bildet. Trocknungsluft strömt über den Führungsabschnitt zu und tritt dann über den Auslassabschnitt aus dem Düsenkörper aus.

Vorgesehen sein kann, dass der Führungsabschnitt über seine Erstreckung zumindest abschnittsweise und insbesondere vollständig einen runden Querschnitt aufweist. Durch den runden Querschnitt werden etwaige Kanten oder Ecken vermieden, die zu ungünstigen Strömungsverhältnissen führen können, so dass das Strömungsverhalten der Trocknungsluft im Führungsabschnitt bei der vorliegenden Ausführungsform verbessert werden kann.

Der Auslassabschnitt ist vorteilhafterweise im Querschnitt trichterförmig oder im Wesentlichen trichterförmig ausgebildet. Dadurch kann der mindestens eine Düsenkörper am Auslassabschnitt zum Beispiel eine Verjüngung aufweisen, durch die die Trocknungsluft beschleunigt wird. Dies kann sich als vorteilhaft für das Trocknungsergebnis erweisen.

Am Auslassabschnitt und im Bereich des Übergangs des Auslassabschnittes zum Führungsabschnitt ist eine Wandung des mindestens einen Düsenkörpers, bezogen auf einen Querschnitt desselben, beispielsweise bogenförmig oder umfasst mehr als zwei jeweils in einem stumpfen Winkel aneinandergefügte Segmente. Auf diese Weise können abrupte Übergänge im Strömungskanal vermieden und ein verbessertes Strömungsverhalten sichergestellt werden.

Ein Verhältnis einer Höhe des Führungsteils zu einer Breite des Führungsteils nimmt vorteilhafterweise in einer von der mindestens einen Gebläseeinrichtung wegweisenden Richtung zu und insbesondere kontinuierlich zu. Die Höhenrichtung verläuft insbesondere durch die Auslassöffnung, den Auslassabschnitt und den Führungsabschnitt hindurch. Die Breitenrichtung verläuft insbesondere senkrecht zur Richtung der Höhe. In der von der Gebläseeinrichtung wegweisenden Richtung nimmt dadurch die Breite des Führungsabschnitts im Verhältnis zur Höhe ab. Anders formuliert kann der Düsenkörper der Gebläseeinrichtung zugewandt eher breiter ausgebildet sein als der Gebläseeinrichtung abgewandt. In der Praxis zeigt es sich, dass auf diese Weise ein vorteilhaftes Strömungsbild im Strömungskanal erzielt wird.

Alternativ kann ein konstantes Verhältnis der Höhe des Führungsteils zur Breite des Führungsteils vorgesehen sein.

Ein Querschnitt des Führungsteils ist an einer der mindestens einen Gebläseeinrichtung abgewandten Seite beispielsweise im Wesentlichen kreisförmig oder kommt einer Kreisform näher als ein Querschnitt an einer der mindestens einen Gebläseeinrichtung zugewandten Seite. An letzterer kann der Querschnitt zum Beispiel eine Form aufweisen, die durch eine Stauchung einer Kreisform hervorgeht, so dass der Führungsabschnitt dem Auslassabschnitt zugewandt in die Breite gezogen ist.

Der Düsenkörper kann beispielsweise einen pilzförmigen oder im Wesentlichen pilzförmigen Querschnitt aufweisen, wobei der "Kopf" des Pilzes vom Führungsabschnitt und der "Stiel" des Pilzes vom Auslassabschnitt definiert ist.

Vorteilhaft kann es sein, wenn der Strömungskanal in von der mindestens einen Gebläseeinrichtung wegweisende Richtung in mindestens einer Raumrichtung eine Querschnittsverengung umfasst. Durch die Querschnittsverengung wird die Trocknungsluft beschleunigt, so dass sich insgesamt ein verbessertes Trocknungsergebnis mit der Trocknungsvorrichtung ergibt. Vorteilhafterweise weist der Strömungskanal Querschnittsverengungen in zwei senkrecht zueinander ausgerichteten Raumrichtungen auf. Die Raumrichtungen sind zum Beispiel diejenigen Richtungen, entlang derer die vorstehend genannte Höhe und Breite des Führungsabschnittes definiert sind.

Vorgesehen sein kann, dass eine Breite der Auslassöffnung an einer der mindestens einen Gebläseeinrichtung abgewandten Seite kleiner ist als an einer der Gebläseeinrichtung zugewandten Seite. Dadurch wird über die Auslassöffnung an der der Gebläseeinrichtung abgewandten Seite ein geringerer Volumenstrom ausgeblasen als an der der Gebläseeinrichtung zugewandten Seite. Beispielsweise bei einer Dachtrocknungsvorrichtung reicht der geringere Volumenstrom aus, weil die Fahrzeugoberfläche der Auslassöffnung an der der Gebläseeinrichtung abgewandten Seite näher liegt. Demgegenüber kann an der der Gebläseeinrichtung zugewandten Seite der erhöhte Volumenstrom für ein wirkungsvolles Abtrocknen der Fahrzeugoberfläche eingesetzt werden. Die Verschmälerung der Auslassöffnung kann diskret in einer oder mehreren Stufen oder alternativ kontinuierlich ausgestaltet sein.

Vorgesehen sein kann, dass die Auslassöffnung angrenzend an das Strömungsumlenkelement in Draufsicht einen dreieckförmigen oder keilförmigen Abschnitt umfasst. Auf diese Weise wird bei einer Dachtrocknungsvorrichtung beispielsweise ein sogenannter "Ersatzseitentrockner" gebildet. Der durch den dreieckförmigen oder keilförmigen Abschnitt austretende Strom von Trocknungsluft beaufschlagt auch Seitenflächen des Fahrzeugs, um diese abzutrocknen.

Die mindestens eine Gebläseeinrichtung kann ein Radialgebläse mit einem um eine Drehachse drehbaren Gebläserad umfassen und einer relativ zur Drehachse versetzten Gebläseauslassöffnung.

Vorgesehen sein kann, dass die Ebene der Auslassöffnung auf derselben Seite wie die Gebläseöffnung relativ zur Drehachse versetzt angeordnet ist und, im bestimmungsgemäßen Gebrauch bei einer Dachtrocknungsvorrichtung, insbesondere oberhalb der Drehachse angeordnet ist. Auf diese Weise kann eine kompakte Bauform der Trocknungsvorrichtung erzielt werden.

Vorgesehen sein kann, dass die Ebene der Auslassöffnung im Wesentlichen mit der Wandung der Gebläseöffnung fluchtet, die der Drehachse des Gebläserads zugewandt ist.

Der mindestens eine Düsenkörper kann ein im Strömungskanal angeordnetes Luftleitelement umfassen. Beispielsweise ist das Luftleitelement dem Strömungsumlenkelement nachgelagert und kann den Strom von Trocknungsluft, unmittelbar strömungsabwärts des Strömungsumlenkelementes, gezielt in Richtung der Auslassöffnung ablenken.

Das Luftleitelement kann verstellbar am mindestens einen Düsenkörper angeordnet sein, so dass eine Bedienperson erforderlichenfalls die Strömungsrichtung der Trocknungsluft über eine Position und/oder Ausrichtung des Luftleitelementes beeinflussen kann.

Der mindestens eine Düsenkörper kann bei einer bevorzugten Ausführungsform der Erfindung ein erstes Düsenkörperteil und ein zweites Düsenkörperteil umfassen, die an einander zugewandten Stirnseiten aneinandergefügt sind und den Strömungskanal zwischen sich definieren. Dies ermöglicht eine konstruktiv einfache Ausgestaltung des Düsenkörpers.

Insbesondere können die Düsenkörperteile Halbschalen sein.

Der mindestens eine Düsenkörper ist beispielsweise aus einem Kunststoffmaterial gefertigt.

Die Trocknungsvorrichtung kann bei einer bevorzugten Ausführungsform der Erfindung zwei Gebläseeinrichtungen und zwei Düsenkörper umfassen, wobei einer jeweiligen Gebläseeinrichtung ein Düsenkörper zugeordnet ist, und wobei die Gebläseeinrichtungen insbesondere auf einander abgewandten Seiten der Trocknungsvorrichtung angeordnet und die Düsenkörper zwischen den Gebläseeinrichtungen positioniert sind. Durch zwei Gebläseeinrichtungen, die jeweils einen Düsenkörper mit Trocknungsluft beaufschlagen, kann ein verbessertes Trocknungsergebnis erzielt werden. Die beiden Düsenkörper grenzen beispielsweise in der Mitte der Trocknungsvorrichtung aneinander an.

Die Düsenkörper können als Gleichteile ausgebildet sein, die zum Beispiel in umgekehrter Orientierung an der Trocknungsvorrichtung eingebaut sind.

Die Gebläseeinrichtungen können symmetrisch zueinander bezüglich einer Mittelebene der Trocknungsvorrichtung ausgestaltet sein.

Als günstig kann es sich erweisen, wenn der mindestens eine Düsenkörper um eine Drehachse drehbar ausgestaltet ist und wenn die Trocknungsvorrichtung eine mindestens einen Düsenkörper angreifende Verstelleinrichtung umfasst. Infolge der Drehung des Düsenkörpers um die Drehachse ändert sich die Ausströmrichtung der Trocknungsluft. Abhängig beispielsweise von einer Kontur des Fahrzeugs kann der Düsenkörper gedreht und dadurch der Strom von Trocknungsluft zum Erzielen eines verbesserten Trocknungsergebnisses gezielt auf die Fahrzeugoberfläche ausgerichtet werden.

Vorgesehen sein kann, dass der Düsenkörper diskrete Drehstellungen einnimmt. Alternativ kann eine kontinuierliche oder quasi-kontinuierliche Verdrehung des Düsenkörpers vorgesehen sein.

Der mindestens eine Düsenkörper ist vorteilhafterweise an der mindestens einen Gebläseeinrichtung oder an einem daran angeordneten Anschlusselement, das von der Trocknungsluft durchströmbar ist, drehbar gelagert. Hierbei handelt es sich zum Beispiel um das vorstehend genannte Anschlusselement, das eine Drehdurchführung für Trocknungsluft ausbildet.

Die Schwenkachse verläuft vorzugsweise durch den Strömungskanal und/oder durch eine Gebläseauslassöffnung der mindestens einen Gebläseeinrichtung hindurch.

Die Trocknungsvorrichtung weist vorteilhafterweise eine Trageinrichtung auf, an der die Verstelleinrichtung an einer der Gebläseeinrichtung abgewandten Seite festgelegt ist und die direkt oder indirekt an einer der Gebläseeinrichtung abgewandten Seite am mindestens einen Düsenkörper angreift. Der mindestens eine Düsenkörper kann auf diese Weise an einander abgewandten Seiten gehalten werden. Zum einen erfolgt eine Halterung an der mindestens einen Gebläseseinrichtung und zum anderen über die Verstelleinrichtung an der Trageinrichtung.

Die Gebläseeinrichtung kann vorzugsweise an der Trageinrichtung festgelegt sein.

Bei einer Mehrzahl von Gebläseeinrichtungen und Düsenkörpern kann vorgesehen sein, dass die beiden Gebläseeinrichtungen an einer gemeinsamen Trageinrichtung gehalten sind.

Die Trageinrichtung kann zum Beispiel als Profil oder als Träger ausgestaltet sein.

Die Verstelleinrichtung greift am mindestens einen Düsenkörper direkt oder indirekt, zum Beispiel über ein Halteteil und/oder über ein Getriebe an.

Die Verstelleinrichtung kann zum Beispiel eine elektrische Verstelleinrichtung sein und einen Antriebsmotor umfassen zum Antreiben eines Antriebsrades, das ein mit dem Drehkörper vorzugsweise fest verbundenes Antriebselement direkt oder über ein Getriebe antreibt. Vorgesehen sein kann zum Beispiel ein Untersetzungsgetriebe, das die Drehzahl des Antriebsmotors herabsetzt. Das Antriebsrad kann ein Zahnrad sein und das Antriebselement ein Zahnrad oder ein Zahnradsegment. Alternativ kommt zum Beispiel ein Rollenantrieb zum Einsatz.

Die Verstelleinrichtung kann zum Beispiel eine pneumatische oder hydraulische Verstelleinrichtung sein und ein Kolben-Zylinder-Aggregat umfassen, das am Drehkörper direkt oder über mindestens ein Kopplungselement angreift. Eine Längenänderung des Kolben-Zylinder-Aggregates kann zum Beispiel über einen Hebel, der an der Trageinrichtung schwenkbar gelagert ist, in eine Drehung des mindestens einen Düsenkörpers umgesetzt werden. Das Kopplungselement ist zum Beispiel eine Koppelstange, die an dem Hebel angreift. Der Hebel ermöglicht eine konstruktiv einfache Kraftanpassung und ferner eine kompakte Bauform, bei der das Kolben-Zylinder-Aggregat zum Beispiel in Längsrichtung der Trageinrichtung montiert sein kann.

Wie bereits erwähnt, kann die Düseneinrichtung zwei Düsenkörper umfassen.

Als vorteilhaft kann es sich erweisen, wenn die Düsenkörper miteinander drehfest zur Verdrehung um die Drehachse verbunden sind und mittels der Verstelleinrichtung gemeinsam um die Drehachse drehbar sind. Dies ermöglicht eine konstruktiv einfache Ausgestaltung, bei der für beide Düsenkörper nur eine Verstelleinrichtung eingesetzt wird. Beispielsweise sind die Düsenkörper an den einander jeweils zugewandten Seiten, die zum Beispiel der jeweiligen Gebläseeinrichtung abgewandt sind, über ein Halteteil miteinander verbunden, an dem die Verstelleinrichtung direkt oder indirekt angreift.

Vorgesehen sein kann, dass der mindestens eine Düsenkörper mindestens ein Aufnahmeelement und/oder mindestens ein Fixierelement für eine Sprüheinrichtung für Reinigungsflüssigkeit umfasst. Die Sprüheinrichtung umfasst zum Beispiel ein Sprührohr mit daran angeordneten Düsen, über die Reinigungsflüssigkeit auf die Fahrzeugoberfläche abgegeben werden kann. Das Aufnahmeelement und/oder Fixierelement ist zum Beispiel an den Düsenkörper angeformt.

Wie bereits erwähnt, betrifft die vorliegende Erfindung auch eine Fahrzeugbehandlungsanlage. Eine erfindungsgemäße Fahrzeugbehandlungsanlage umfasst mindestens eine Trocknungsvorrichtung der vorstehend beschriebenen Art, die insbesondere als Dachtrocknungsvorrichtung ausgebildet ist.

Vorteile, die bereits im Zusammenhang mit der Erläuterung der erfindungsgemäßen Trocknungsvorrichtung erwähnt wurden, können bei der erfindungsgemäßen Fahrzeugbehandlungsanlage ebenfalls erzielt werden. Vorteilhafte Ausführungsformen der erfindungsgemäßen Fahrzeugbehandlungsanlage ergeben sich durch vorteilhafte Ausführungsformen der erfindungsgemäßen Trocknungsvorrichtung. Auf die obigen Ausführungen wird verwiesen.

Die Fahrzeugbehandlungsanlage ist insbesondere eine Fahrzeugwaschanlage und kann Reinigungsaggregate, wie zum Beispiel Seitenbürsten, eine Dachbürste, Radwaschbürsten und/oder Sprühvorrichtungen, umfassen. Zusätzlich zur (Dach-)Trocknungsvorrichtung kann mindestens eine Seitentrocknungsvorrichtung vorgesehen sein.

Die Fahrzeugbehandlungsanlage, insbesondere die Fahrzeugwaschanlage, ist zum Beispiel eine Portalanlage, die auf einer Aufstellfläche relativ zu einem stationären Fahrzeug verfahrbar ist. Alternativ kann zum Beispiel eine Straßenanlage vorgesehen sein, insbesondere eine Waschstraße, bei der das Fahrzeug relativ zu stationären Trocknungsvorrichtungen und/oder Reinigungsaggregaten bewegt wird.

Die Trocknungsvorrichtung kann über eine Hubeinrichtung höhenverstellbar an der Fahrzeugbehandlungsanlage angeordnet sein. Hierbei kann zum Beispiel eine Höhenverstellung abhängig von einer Kontur des Fahrzeugs erfolgen.

Die nachfolgende Beschreibung bevorzugter Ausführungsformen der Erfindung dient im Zusammenhang mit der Zeichnung der näheren Erläuterung der Erfindung. Es zeigen:
Figur 1: eine schematische Darstellung einer bevorzugten Ausführungsform der erfindungsgemäßen Fahrzeugbehandlungsanlage, ausgestaltet als Portalwaschanlage, wobei die Fahrzeugbehandlungsanlage eine bevorzugte Ausführungsform der erfindungsgemäßen Trocknungsvorrichtung umfasst, die als Dachtrocknungsvorrichtung ausgestaltet ist;
Figur 2: eine perspektivische Darstellung der Dachtrocknungsvorrichtung der Portalwaschanlage aus Figur 1;
Figur 3: eine vergrößerte Teilschnittdarstellung der Dachtrocknungsvorrichtung, wobei ein Längsschnitt derselben gezeigt ist;
Figur 4: eine Schnittansicht eines Düsenkörpers der Dachtrocknungsvorrichtung längs der Linie 4-4 in Figur 3;
Figur 5: eine Schnittansicht des Düsenkörpers längs der Linie 5-5 in Figur 3;
Figur 6: eine Schnittansicht des Düsenkörpers längs der Linie 6-6 in Figur 3;
Figur 7: eine Schnittansicht des Düsenkörpers längs der Linie 7-7 in Figur 3;

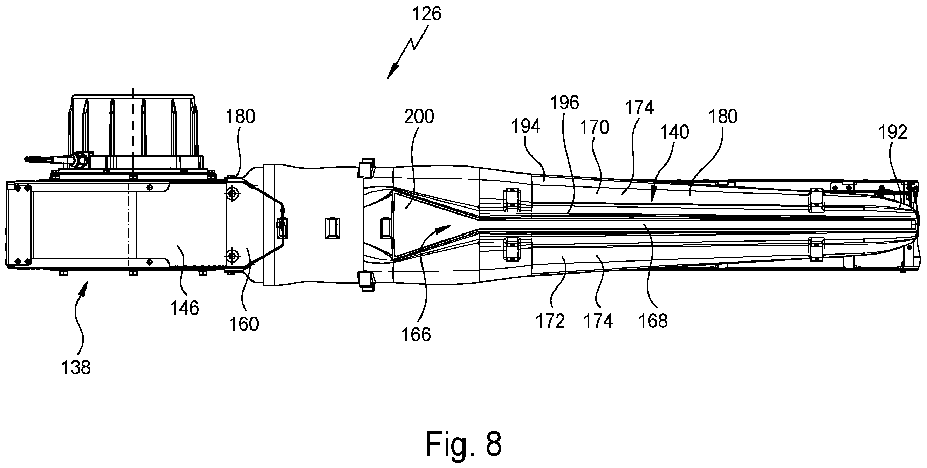

Figur 8: eine Teilansicht der Dachtrocknungsvorrichtung von unten in Richtung des Pfeiles "8" in Figur 2;
Figur 9: eine vergrößerte Darstellung von Detail A in Figur 2; und
Figur 10: eine Darstellung entsprechend Figur 9 bei einer weiteren bevorzugten Ausführungsform der erfindungsgemäßen Trocknungsvorrichtung.

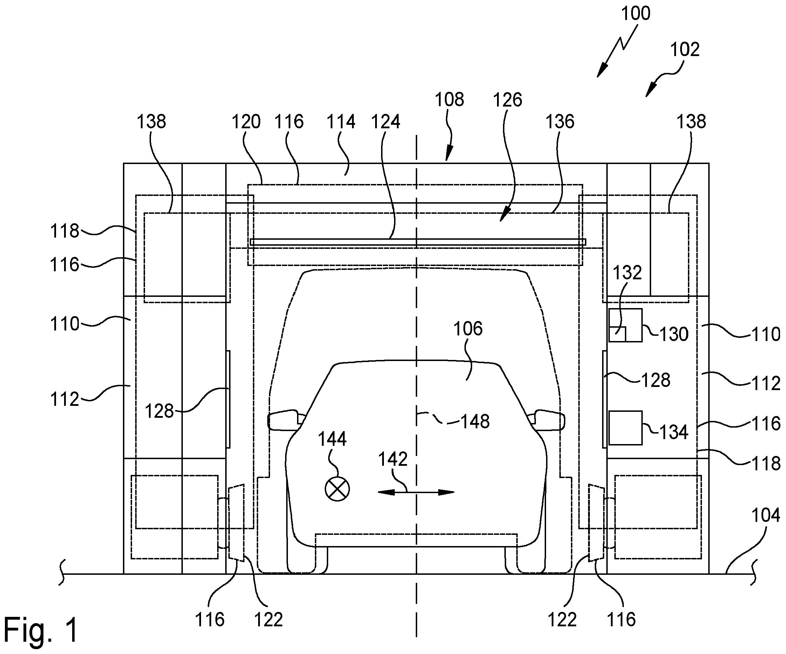

Die Figur 1 zeigt in schematischer Darstellung eine insgesamt mit dem Bezugszeichen 100 belegte vorteilhafte Ausführungsform der erfindungsgemäßen Fahrzeugbehandlungsanlage, bei der es sich vorliegend um eine Fahrzeugwaschanlage 102 handelt. Die Fahrzeugwaschanlage 102 ist vorliegend als Portalanlage ausgeführt, die relativ zu einem auf einer Aufstellfläche 104 stationären Fahrzeug 106 verfahren werden kann.

Die Waschanlage 102 umfasst ein schematisch dargestelltes Portal 108 mit zwei im Abstand zueinander angeordneten Trägern 110, die durch vorliegend vertikal ausgerichtete Portalsäulen 112 ausgebildet sind. Die Portalsäulen 112 sind miteinander durch mindestens einen Querträger 114 verbunden.

Positions- und Orientierungsangaben wie beispielsweise "vertikal", "horizontal", "oben", "unten" oder dergleichen sind vorliegend auf einen bestimmungsgemäßen Gebrauch der Fahrzeugwaschanlage 102 bezogen. Hierbei steht das Portal 108 auf der vorliegend als horizontal angesehenen Aufstellfläche 104 auf.

Zum Abreinigen des Fahrzeugs 106 umfasst die Fahrzeugwaschanlage 102 verschiedenartige Reinigungsaggregate 116. Vorliegend sind als Reinigungsaggregate 116 Seitenbürsten 118 zum Abreinigen von Seitenflächen des Fahrzeugs 106 vorgesehen, eine Dachbürste 120 zum Abreinigen obenliegender Fahrzeugflächen, der Front und des Hecks des Fahrzeugs 106 und Radwaschbürsten 122 zum Abreinigen von Fahrzeugrädern.

Als weiteres Reinigungsaggregat 116 ist eine Sprüheinrichtung 124 vorhanden, die ein Sprührohr mit daran angeordneten Düsen zum Ausbringen einer Reinigungsflüssigkeit auf das Fahrzeug 106 umfasst.

Im Anschluss an die Reinigung kann das Fahrzeug 106 getrocknet werden. Hierzu umfasst die Fahrzeugwaschanlage 102 eine Dachtrocknungsvorrichtung 126, bei der es sich um eine bevorzugte Ausführungsform der erfindungsgemäßen Trocknungsvorrichtung handelt. Ferner sind Seitentrocknungsvorrichtungen 128 zum Abtrocknen von Seitenflächen des Fahrzeugs 106 vorgesehen.

Die Dachtrocknungsvorrichtung 126 ist im vorliegenden Beispiel über eine nur schematisch dargestellte Hubeinrichtung 130 an dem Portal 108 höhenverstellbar gehalten. Die Hubeinrichtung 130 umfasst zum Beispiel einen Antriebsmotor 132 und Zugelemente, beispielsweise Riemen, die an der Dachtrocknungsvorrichtung 126 angreifen und unter Einsatz des Antriebsmotors 132 angehoben oder abgesenkt werden können.

Es versteht sich, dass am Portal 108, insbesondere an den Trägern 110, Führungen für die Dachtrocknungsvorrichtung 126 vorgesehen sein können.

Die Fahrzeugwaschanlage 102 umfasst eine Steuereinrichtung 134, über die der Antriebsmotor 132 ansteuerbar ist. Die Steuereinrichtung 134 kann den Antriebsmotor 132 beispielsweise derart ansteuern, dass die Dachtrocknungsvorrichtung 126 während des Trocknungsvorgangs der Kontur des Fahrzeugs 106 folgt. Durch die konturnahe Bewegung der Dachtrocknungsvorrichtung 126 kann ein sehr gutes Trocknungsergebnis erzielt werden. Die Kontur des Fahrzeugs 106 kann zum Beispiel in an sich bekannter Weise mittels einer optischen Vermessungseinrichtung und/oder unter Nutzung der Leistungsaufnahme der Dachbürste 120 ermittelt werden.

Nachfolgend wird auf die Konstruktion und Funktionsweise der Dachtrocknungsvorrichtung 126 eingegangen.

Die Dachtrocknungsvorrichtung 126 umfasst eine Trageinrichtung 136, zwei Gebläseeinrichtungen 138 und zwei Düsenkörper 140.

Die Trageinrichtung 136 ist als längserstreckter Träger ausgebildet, der in einer Querrichtung 142 der Fahrzeugwaschanlage 102 ausgerichtet ist. Die Querrichtung 142 ist senkrecht zu einer Längsrichtung 144 der Fahrzeugwaschanlage 102 ausgerichtet. Fahrzeuge 106 befahren die Aufstellfläche 104 in einer Einfahrrichtung, die in der Längsrichtung 144 verläuft.

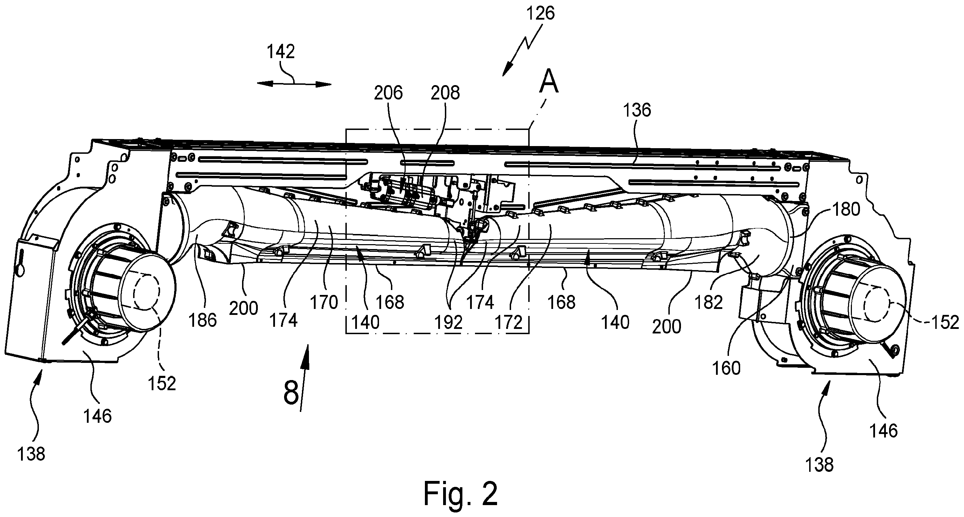

Die Figur 2 zeigt eine perspektivische Darstellung der Dachtrocknungsvorrichtung 126 von der Rückseite der Fahrzeugwaschanlage 102, entgegen der Einfahrrichtung betrachtet.

Die Gebläseeinrichtungen 138 sind an einander gegenüberliegenden Enden an der Trageinrichtung 136 festgelegt. Ein Führungsteil, an dem beispielsweise das Zugelement, wie vorstehend erläutert, gehalten ist, ist zum Beispiel mit einem Gebläsegehäuse 146 der Gebläseeinrichtung 138 fest verbunden.

Die Dachtrocknungsvorrichtung 126 ist beispielsweise so bemessen, dass die lichte Weite des Portals 108 geringer ist als die Erstreckung der Dachtrocknungsvorrichtung 126. Letztere ist zum Beispiel hinter den Portalsäulen 112 angeordnet, wobei die lichte Weite ganz oder weitgehend von den Düsenkörpern 140 eingenommen wird. Denkbar ist jedoch, dass auch die Gebläseeinrichtungen 138 zumindest zum Teil in die lichte Weite des Portals 108 hineinragen.

Die Gebläseeinrichtungen 138 sind relativ zueinander symmetrisch bezüglich einer Mittellängsebene 148 der Dachtrocknungsvorrichtung 126 und der Fahrzeugwaschanlage 102 gebildet. Nachfolgend wird lediglich die Konstruktion einer Gebläseeinrichtung 138 erläutert. Die entsprechenden Erläuterungen gelten korrespondierend für die jeweils andere Gebläseeinrichtung 138.

Ähnlich verhält es sich mit den Düsenkörpern 140. Die Düsenkörper 140 sind Gleichteile, die in umgekehrter Orientierung in Querrichtung 142 angeordnet sind. Aus diesem Grund wird nachfolgend im Wesentlichen auf die Konstruktion nur eines Düsenkörpers 140 eingegangen. Die diesbezüglichen Ausführungen gelten in entsprechender Weise für den anderen Düsenkörper 140.

Jedem Düsenkörper 140 ist eine Gebläseeinrichtung 138 zugeordnet, und umgekehrt. Die jeweilige Anbindung ist identisch, weswegen auch in Bezug hierauf nur auf eine Gebläseeinrichtung 138 und einen Düsenkörper 140 eingegangen wird.

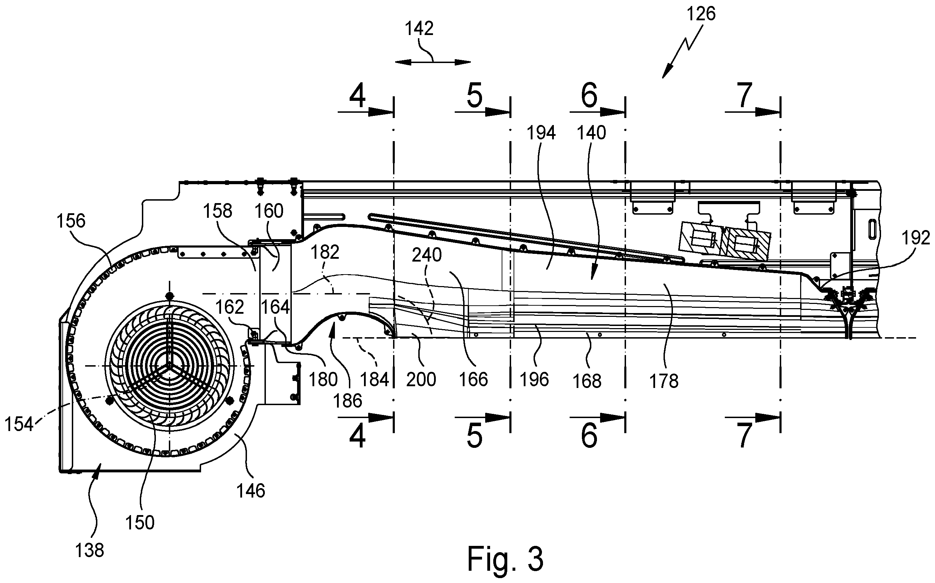

Wie insbesondere aus den Figuren 2 und 3 hervorgeht, ist die Gebläseeinrichtung 138 vorliegend als Radialgebläse ausgestaltet. Im Gebläsegehäuse 146 ist ein Gebläserad 150 angeordnet. Das Gebläserad 150 ist mittels eines Antriebsmotors 152 um eine Drehachse 154 drehbar. Dabei wird ein Luftstrom von Trocknungsluft erzeugt, der im Gebläsegehäuse 146 an einem spiralförmigen Luftleitelement 156 entlangströmt und an einer Gebläseauslassöffnung 158 aus dem Gebläsegehäuse 156 austritt.

Vorliegend ist die Gebläseeinrichtung 138 so angeordnet, dass der Luftstrom parallel zur Aufstellfläche 104, insbesondere horizontal, aus der Gebläseauslassöffnung 158 austritt.

An der Gebläseauslassöffnung 158 ist ein Anschlusselement 160 vorgesehen. Das Anschlusselement 160 ist mit dem Gebläsegehäuse 146 verbunden, beispielsweise durch Verschraubung. Im vorliegenden Fall übergreift das Anschlusselement 160 einen Rand 162 der Gebläseauslassöffnung 158 und liegt an diesem Rand 162 beispielsweise flanschartig an.

Das Anschlusselement 160 weist an der dem Gebläsegehäuse 146 abgewandten Seite einen Rand 164 auf. Der Rand 164 ist rund und vorliegend insbesondere kreisrund ausgebildet. Das Anschlusselement 160 ist koaxial zur Gebläseauslassöffnung 158 ausgerichtet.

Der Düsenkörper 140 ist längserstreckt ausgebildet und verläuft in der Querrichtung 142. Der Düsenkörper 140 bildet einen Strömungskanal 166 für Trocknungsluft, die von der Gebläseeinrichtung 138 zuströmt.

Ferner bildet der Düsenkörper 140 eine Auslassöffnung 168. Die Auslassöffnung 168 ist nach unten auf das Fahrzeug 106 gerichtet. Wie insbesondere aus den Figuren 2 bis 7 hervorgeht, ist der Düsenkörper 140 vorliegend konstruktiv einfach im Wesentlichen aus zwei Düsenkörperteilen 170, 172 aufgebaut. Die Düsenkörperteile 170, 172 sind vorliegend in vorteilhafter Weise als Halbschalen 174 ausgebildet und liegen über jeweilige Stirnseiten (vorliegend Stirnkanten) 176 aneinander an.

Die Düsenkörperteile 172 bilden gemeinsam eine Wandung 178 des Düsenkörpers 140, die den Strömungskanal 166 einfasst.

An der der Gebläseeinrichtung 138 zugewandten Seite ist der Düsenkörper 140 mit dem Anschlusselement 160 verbunden. Zu diesem Zweck übergreift ein korrespondierend zum Rand 164 gebildeter Rand 180 des Düsenkörpers 140 das Anschlusselement 160, vorliegend insbesondere formschlüssig. Der Düsenkörper 140 ist mit dem Anschlusselement 160 jedoch nicht fest verbunden, sondern relativ zu diesem drehbar ausgebildet um eine Drehachse 182. Die Drehachse 182 ist zugleich eine Achse des Anschlusselementes 160 und der Gebläseauslassöffnung 158.

Die bereits erwähnte Auslassöffnung 168 des Düsenkörpers 140 definiert vorliegend eine Ebene 184. Trocknungsluft durchströmt die Ebene 184, wenn sie aus der Auslassöffnung 168 austritt.

Im vorliegenden Ausführungsbeispiel ist die Auslassöffnung 168 so angeordnet, dass die Ebene 184 im Wesentlichen auf einer Höhe mit dem unteren, der Drehachse 154 zugewandten Rand 162 der Gebläseauslassöffnung 158 verläuft.

Die Gebläseauslassöffnung 158 ist relativ zur Drehachse 154 versetzt angeordnet (Figur 3), vorliegend höher als die Drehachse 154. Die Ebene 184 ist ebenfalls in dieselbe Richtung versetzt bezüglich der Drehachse 154 angeordnet.

Durch vorstehend beschriebene Konfiguration weist die Dachtrocknungsvorrichtung 126 eine verhältnismäßig kompakte Bauform auf.

Wie insbesondere aus den Figuren 2 und 3 deutlich wird, umfasst der Düsenkörper 140 ein Strömungsumlenkelement 186 für die Trocknungsluft. Das Strömungsumlenkelement 186 ist der Auslassöffnung 168 vorgelagert und vorliegend eingangsseitig am Düsenkörper 140 angeordnet. Ferner ist das Strömungsumlenkelement 186 dem Anschlusselement 160 unmittelbar nachgelagert angeordnet.

Das Strömungsumlenkelement 186 wird durch die Wandung 178 gebildet und ist dabei durch Ausformung an den Düsenkörperteilen 172 ausgebildet.

Trocknungsluft wird am Strömungsumlenkelement 186 zunächst in einer von der Ebene 184 der Auslassöffnung 168 wegweisenden Richtung (nach oben) abgelenkt. Insbesondere verläuft das Strömungsumlenkelement 186 an der der Auslassöffnung 168 zugewandten Seite und vorliegend auch an der der Auslassöffnung 168 abgewandten Seite weg von der Ebene der Auslassöffnung 168. Anschließend erfolgt eine weitere Umlenkung der Trocknungsluft wieder in Richtung auf die Auslassöffnung 168.

Insgesamt ist die Wandung 178 am Strömungsumlenkelement 186 an der der Auslassöffnung 168 zugewandten und abgewandten Seite jeweils bogenförmig gebildet (Figur 3). Die Trocknungsluft nimmt dadurch einen bogenförmigen Verlauf nach oben weg von der Ebene 184 der Auslassöffnung 168 und anschließend wieder einen bogenförmigen Verlauf nach unten in Richtung auf die Auslassöffnung 168. Es zeigt sich in der Praxis, dass auf diese Weise eine Durchströmung der Ebene 184 der Auslassöffnung 168 vorzugsweise senkrecht oder im Wesentlichen senkrecht erzielt werden kann. Dadurch kann, wie sich in der Praxis zeigt, ein gutes Trocknungsergebnis am Fahrzeug 106 erzielt werden.

Im Bereich des Strömungsumlenkelementes 186 ist ein Querschnitt des Strömungskanals 166 im Wesentlichen konstant.

Wie aus Figur 3 weiter hervorgeht, beschreibt die Wandung 178 am Strömungsumlenkelement 186 an der der Auslassöffnung 168 zugewandten Seite (im Längsschnitt) näherungsweise einen Halbkreis.

Strömungsabwärts des Strömungsumlenkelementes 186 verjüngt sich der Strömungskanal 166.

Vorliegend verjüngt sich der Strömungskanal 166 in zwei Raumrichtungen 188, 190. Die Raumrichtungen 188, 190 stehen quer und vorliegend insbesondere senkrecht aufeinander.

Die Raumrichtung 188 verläuft senkrecht zur Ebene der Auslassöffnung 168 und entspricht einer Höhenrichtung des Düsenkörpers 140. Die Raumrichtung 190 entspricht einer Breitenrichtung des Düsenkörpers 140.

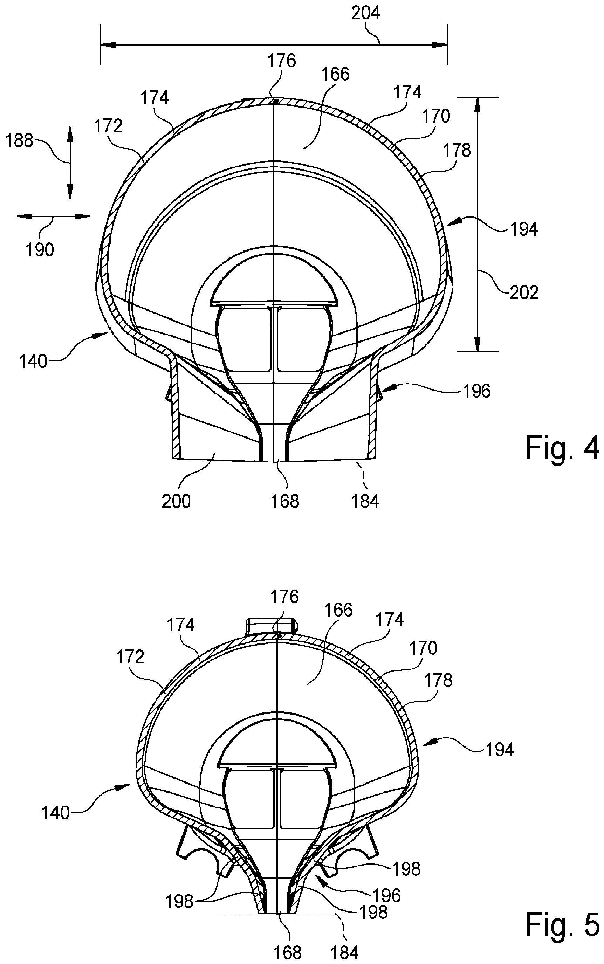

Ausgehend vom Strömungsumlenkelement 186 erfolgt - abgesehen von einer anfänglichen kurzen Verbreiterung (Figur 4) - eine kontinuierliche Verengung des Strömungskanals 166 in den Raumrichtungen 188, 190 bis zu der der Gebläseeinrichtung 138 abgewandten Seite 192 des Düsenkörpers 140.

Wie insbesondere aus den Figuren 4 bis 7 hervorgeht, weist der Düsenkörper 140 strömungsabwärts des Strömungsumlenkelementes 186 zwei ineinander übergehende Abschnitte auf, die jeweils zur Hälfte von den Düsenkörperteilen 172 ausgebildet werden. Zum einen ist ein Führungsabschnitt 194 vorgesehen, der den Strömungskanal 166 einfasst. Zum anderen ist ein Auslassabschnitt 196 vorgesehen, der die Auslassöffnung 168 bildet.

Der Auslassabschnitt 196 ist unterhalb des Führungsabschnittes 194 angeordnet. Durch den Strömungskanal 166 strömende Trocknungsluft wird im Führungsabschnitt 194 geführt und tritt nach unten in den Auslassabschnitt 196 ein. Durch den Auslassabschnitt 196 und die endseitig an diesem gebildete Auslassöffnung 168 tritt die Trocknungsluft aus.

Der Führungsabschnitt 194 weist einen runden Querschnitt auf, und der Auslassabschnitt 196 weist einen trichterförmigen Querschnitt auf. Die Wandung 178 ist so ausgebildet, dass sie mehr als zwei jeweils unter einem stumpfen Winkel aneinandergefügte Segmente 198 umfasst. Durch eine derartige Ausgestaltung entfallen beim Düsenkörper 140 Kanten, Ecken oder abrupte Übergänge, was sich als vorteilhaft für das Strömungsverhalten erweist.

Die Auslassöffnung 168 ist ihrerseits ebenfalls nicht von konstantem Querschnitt. Unmittelbar angrenzend an das Strömungsumlenkelement 186 weist die Auslassöffnung 168 vorliegend einen in Draufsicht dreieckförmigen Abschnitt 200 auf. Dieser, der Gebläseeinrichtung 138 zugewandte Abschnitt 200 bildet einen Ersatzseitentrockner. Durch den Abschnitt 200 austretende Trocknungsluft kann dazu eingesetzt werden, die Seitenflächen des Fahrzeugs 106 zusätzlich zu der aus den Seitentrocknungsvorrichtungen 128 austretenden Trocknungsluft zu beaufschlagen.

Anschließend an den Abschnitt 200 verschmälert sich die Auslassöffnung 168 in der von der Gebläseeinrichtung 138 wegweisenden Richtung. Hierbei kann eine diskrete Verjüngung an mindestens einer Position oder eine kontinuierliche Verjüngung über die Länge der Auslassöffnung 168 vorgesehen sein. Im vorliegenden Fall erfolgt an nur einer Position eine Verengung der Auslassöffnung 168, zum Beispiel von einer Breite von ungefähr 20mm zu einer Breite von ungefähr 16mm.

Durch die Verschmälerung wird der Volumenstrom, der an der Gebläseeinrichtung 138 abgewandten Seite austritt, verringert. Da in diesem Bereich, d. h. mittig an der Dachtrocknungsvorrichtung 126, der Abstand relativ zur Oberfläche des Fahrzeugs 106 üblicherweise geringer ist, reicht der verringerte Volumenstrom für ein gutes Trocknungsergebnis aus. Demgegenüber kann randnah oder insbesondere auch im Bereich des Ersatzseitentrockners ein vergrößerter Volumenstrom für eine verbesserte Trocknung bereitgestellt werden.

Die unterschiedlichen Querschnittsformen des Düsenkörpers 140 infolge der Verjüngungen werden nachfolgend unter Verweis auf die Figuren 4 bis 7 beschrieben.

Ausgehend von dem Strömungsumlenkelement 186 nimmt ein Verhältnis einer Höhe 202 zu einer Breite 204 des Führungsabschnittes 194 in der von der Gebläseeinrichtung 138 wegweisenden Richtung zu. Anders ausgedrückt wird der Düsenkörper 140 am Führungsabschnitt 194 mit zunehmendem Abstand von der Gebläseeinrichtung 138 im Vergleich zu Höhe 202 schmaler. Die Höhe 202 wird vorliegend längs der Raumrichtung 188 bestimmt und die Breite 204 längs der senkrecht dazu ausgerichteten Raumrichtung 190.

Im Bereich des Abschnittes 200 mit dem Ersatzseitentrockner weist der Düsenkörper 140 näherungsweise einen Querschnitt auf, der sich durch die Kontur einer Jakobsmuschel beschreiben lässt.

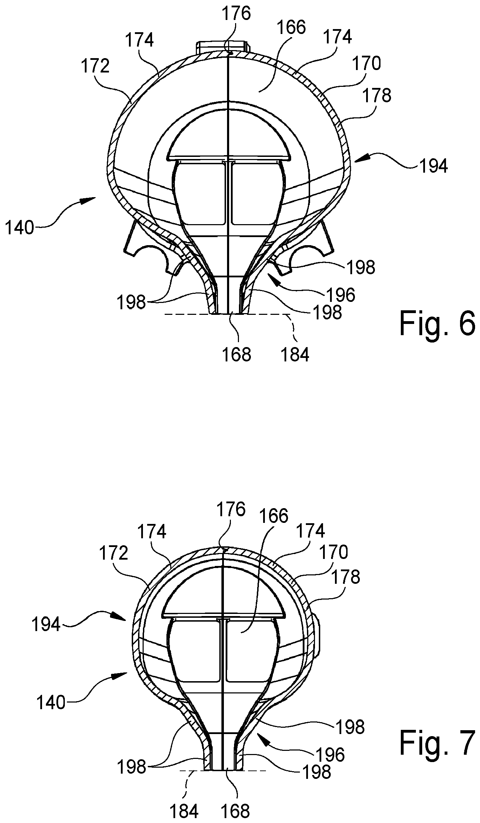

Weiter strömungsabwärts ähnelt die Kontur des Düsenkörpers 140 einem gestauchten Kreis, der in Richtung auf den Auslassabschnitt 196 in die Breite gezogen ist (Figur 5). Noch weiter strömungsabwärts entspricht die Kontur des Düsenkörpers 140 weiterhin einem gestauchten Kreis, wobei die Stauchung geringer ist und der Führungsabschnitt 194 weniger weit in die Breite gezogen ist (Figur 6).

Weiter strömungsabwärts, nahe der Seite 192, ist der Querschnitt des Führungsabschnittes 194 näherungsweise kreisförmig.

Die Querschnittsformen des Düsenkörpers 140 gemäß den Figuren 5 bis 7 lassen sich näherungsweise als pilzförmig beschreiben.

Auf die Möglichkeit, den Düsenkörper 140 zu verdrehen, wurde bereits eingegangen. Nachfolgend wird eine Verstelleinrichtung 206 für den Düsenkörper 140 beläutert.

Die Verstelleinrichtung 206 ist beispielsweise mittels der Steuereinrichtung 134 ansteuerbar, um abhängig von der Position der Dachtrocknungsvorrichtung 126 relativ zum Fahrzeug 106 die Richtung der Trocknungsluft zu verändern und dadurch das Trocknungsergebnis zu erzielen.

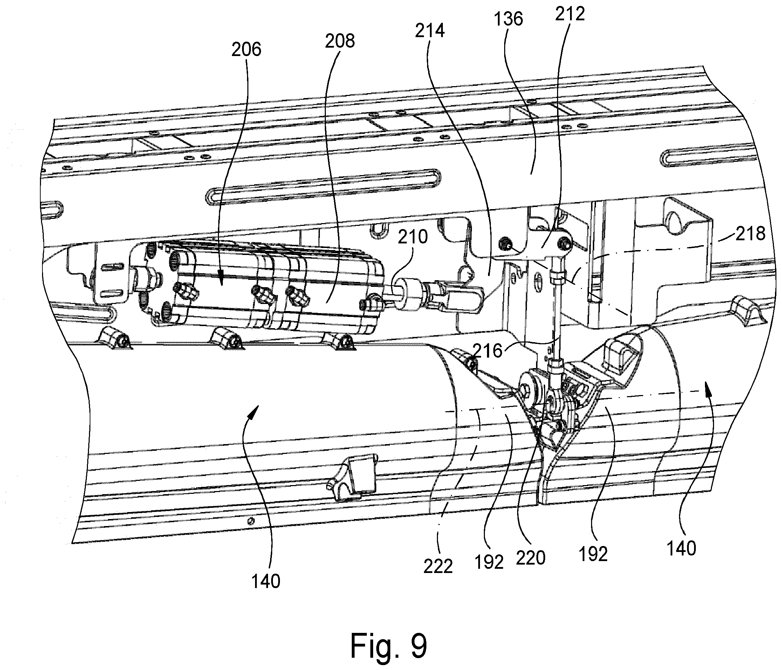

Wie insbesondere aus den Figuren 2 und 9 hervorgeht, ist die Verstelleinrichtung 206 pneumatisch ausgestaltet und umfasst ein Kolben-Zylinder-Aggregat 208. Das Aggregat 208 ist mit einem Ende an der Trageinrichtung 136 nahe der der Gebläseeinrichtung 138 abgewandten Seite des Düsenkörpers 140 festgelegt.

Ein Kolben 210 des Aggregates 208 ist über mindestens ein Kopplungselement indirekt mit dem Düsenkörper 140 gekoppelt.

Als ein Kopplungselement 212 ein an der Trageinrichtung 136 verschwenkbarer Hebel 214 vorgesehen, dessen erster Hebelarm am Kolben 210 angreift und dessen zweiter Hebelarm mit einem weiteren Kopplungselement 216 gekoppelt ist. Der Hebel 214 ist um eine Schwenkachse 218 verschwenkbar, die insbesondere senkrecht zur Trageinrichtung 136 und zur Erstreckungsrichtung des Düsenkörpers 140 ausgerichtet ist.

Das Kopplungselement 216 ist eine Koppelstange, die am Hebel 214 angelenkt ist und dessen weiteres Ende schwenkbar mit einem Halteteil 220 verbunden ist. Die diesbezügliche Schwenkachse verläuft längs der Erstreckungsrichtung des Düsenkörpers 140 und ist mit einem Bezugszeichen 222 belegt.

Das Halteteil 220 ist vorliegend an beiden seitlich nebeneinander angeordneten Düsenkörpern 140 verbunden (Figur 9). Dies erlaubt es, mit nur einer Verstelleinrichtung beide Düsenkörper 140 zu verdrehen. Die Verdrehung erfolgt synchron und um denselben Schwenkwinkel um die Drehachse 182.

Wird beispielsweise gegenüber der in Figur 9 dargestellten Stellung der Kolben 210 ausgefahren, verschwenkt der Hebel 214 nach oben und zieht das Kopplungselement 216 nach oben. Dadurch werden die Düsenkörper 140 aus der Zeichnungsebene nach vorne heraus gedreht. Dies entspricht einer Drehung an der Fahrzeugwaschanlage 102 nach hinten.

Umgekehrt kann der Kolben 210 eingefahren werden, und die Düsenkörper 140 werden aus der Zeichnungsebene heraus nach hinten gedreht. Dies entspricht einer Drehung an der Fahrzeugwaschanlage 102 nach vorne.

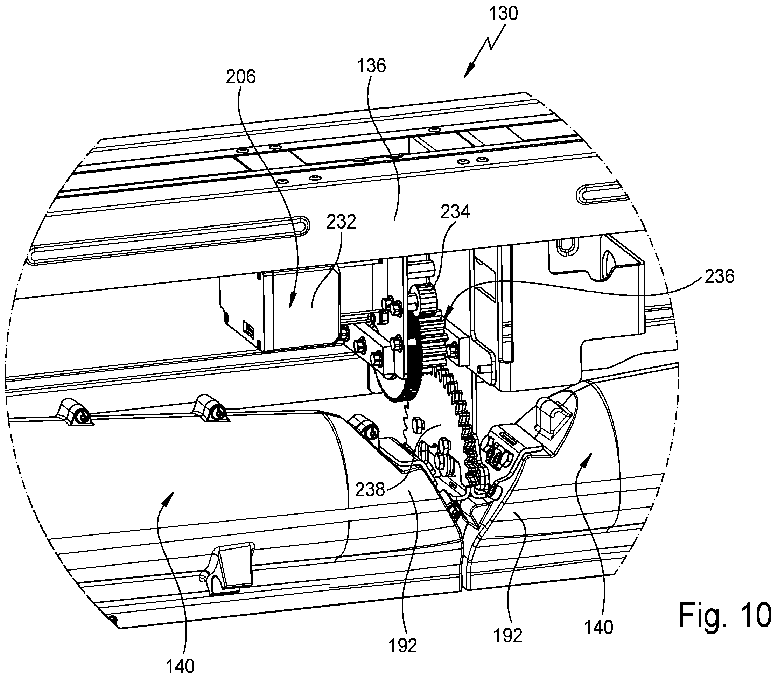

Figur 10 zeigt in einer der Figur 9 entsprechenden Darstellung eine weitere bevorzugte Ausführungsform der erfindungsgemäßen Dachtrocknungsvorrichtung mit dem Bezugszeichen 230 in einer Teildarstellung.

Bei der Dachtrocknungsvorrichtung 230 ist die Verstelleinrichtung 206 elektrisch ausgestaltet und umfasst einen Antriebsmotor 232. Der Antriebsmotor 232 treibt ein schematisch dargestelltes Antriebsrad 234 über dieses ein Getriebe 236 an. Hierbei handelt es sich um ein Untersetzungsgetriebe zum Herabsetzen einer Drehzahl des Antriebsrads 234.

Über das Getriebe 236 wird ein Antriebselement 238 angetrieben. Bei dem Antriebselement 238 handelt es sich vorliegend um ein Zahnradsegment, das mit einem Rad des Getriebes 236 kämmt. Das Antriebselement 238 ist über das Halteteil 220 mit beiden Düsenkörpern 140 verbunden. Somit besteht auch bei der Dachtrocknungsvorrichtung 230 die Möglichkeit, mit nur einer Verstelleinrichtung 206 die Düsenkörper 140 synchron und um denselben Winkel um den Drehachse 182 zu verdrehen. Die Verdrehung kann in beide Richtungen um die Drehachse 182 erfolgen.

Das Getriebe 236 ist bei der hier beschriebenen Ausführungsform beispielhaft. Denkbar wäre auch ein direkter Antrieb des Antriebselementes 238 über den Antriebsmotor 232.

Im Übrigen wird auf die obigen Ausführungsformen zur Trocknungsvorrichtung 126 verwiesen. Abgesehen von obigen Unterschieden sind die Dachtrocknungsvorrichtungen 126 und 230 identisch ausgestaltet.

Figur 3 zeigt ein im Strömungskanal 166 angeordnetes optionales Luftleitelement 240. Das Luftleitelement 240 ist vorliegend dem Strömungsumlenkelement 186 nachgelagert angeordnet, jedoch am Anfang der Auslassöffnung 186, vorliegend oberhalb des Abschnittes 200. Hierbei ist das Luftleitelement 240 von oben nach unten bogenförmig gekrümmt und lenkt einen Strom von Trocknungsluft anteilig so um, dass Trocknungsluft auch am Abschnitt 200 im Wesentlichen senkrecht aus der Auslassöffnung 168 austritt.

Vorgesehen sein kann, dass eine Bedienperson die Position und/oder Ausrichtung des Luftleitelementes 240 variieren kann, um die Ausströmungsrichtung von Trocknungsluft zu verändern.

### Bezugszeichenliste

- 100: Fahrzeugbehandlungsanlage
- 102: Fahrzeugwaschanlage
- 104: Aufstellfläche
- 106: Fahrzeug
- 108: Portal
- 110: Träger
- 112: Portalsäule
- 114: Querträger
- 116: Reinigungsaggregat
- 118: Seitenbürste
- 120: Dachbürste
- 122: Radwaschbürste
- 124: Sprüheinrichtung
- 126: Dachtrocknungsvorrichtung
- 128: Seitentrocknungsvorrichtung
- 130: Hubeinrichtung
- 132: Antriebsmotor
- 134: Steuereinrichtung
- 136: Trageinrichtung
- 138: Gebläseeinrichtung
- 140: Düsenkörper
- 142: Querrichtung
- 144: Längsrichtung
- 146: Gebläsegehäuse
- 148: Mittellängsebene
- 150: Gebläserad
- 152: Antriebsmotor
- 154: Drehachse
- 156: Luftleitelement
- 158: Gebläseauslassöffnung
- 160: Anschlusselement
- 162: Rand
- 164: Rand
- 166: Strömungskanal
- 168: Auslassöffnung
- 170: Düsenkörperteil
- 172: Düsenkörperteil
- 174: Halbschale
- 176: Stirnseite
- 178: Wandung
- 180: Rand
- 182: Drehachse
- 184: Ebene
- 186: Strömungsumlenkelement
- 188: Raumrichtung
- 190: Raumrichtung
- 192: Seite
- 194: Führungsabschnitt
- 196: Auslassabschnitt
- 198: Segment
- 200: Abschnitt
- 202: Höhe
- 204: Breite
- 206: Verstelleinrichtung
- 208: Kolben-Zylinder-Aggregat
- 210: Kolben
- 212: Kopplungselement
- 214: Hebel
- 216: Kopplungselement
- 218: Schwenkachse
- 220: Halteteil
- 222: Schwenkachse
- 230: Dachtrocknungsvorrichtung
- 232: Antriebsmotor
- 234: Antriebsrad
- 236: Getriebe
- 238: Antriebselement
- 240: Luftleitelement

## Patentansprüche

1. Trocknungsvorrichtung für eine Fahrzeugbehandlungsanlage (100), insbesondere eine Dachtrocknungsvorrichtung (126, 230), umfassend mindestens eine Gebläseeinrichtung (138) zum Bereitstellen von Trocknungsluft und eine Düseneinrichtung, die mindestens einen Düsenkörper (140) umfasst, wobei der mindestens eine Düsenkörper (140) längserstreckt ausgebildet und mit der mindestens einen Gebläseeinrichtung (138) strömungsverbunden ist, einen Strömungskanal (166) und eine schlitzförmige Auslassöffnung (168) für Trocknungsluft umfasst, **dadurch gekennzeichnet, dass** der mindestens eine Düsenkörper (140) ein der Auslassöffnung (168) in Zuströmrichtung der von der mindestens einen Gebläseeinrichtung (138) zuströmenden Trocknungsluft vorgelagertes Strömungsumlenkelement (186) umfasst oder ausbildet, das insbesondere ausgebildet ist durch eine Wandung (178) des Düsenkörpers (140), über welches Strömungsumlenkelement (186) die Trocknungsluft an der der Auslassöffnung (168) zugewandten Seite des Strömungskanals (166) in einer von einer Ebene der Auslassöffnung (168) weg weisenden Richtung umgelenkt und anschließend wieder auf die Auslassöffnung (168) zu umgelenkt wird.

2. Trocknungsvorrichtung nach Anspruch 1, **dadurch gekennzeichnet, dass** das Strömungsumlenkelement (186), insbesondere eine Wandung (178) des mindestens einen Düsenkörpers (140), an einer der Auslassöffnung (168) zugewandten Seite bogenförmig weg von der Ebene (184) der Auslassöffnung (168) und anschließend in Richtung auf die Auslassöffnung (168) verläuft und/oder dass das Strömungsumlenkelement (186), insbesondere eine Wandung (178) des Düsenkörpers (140), an einer der Auslassöffnung (168) abgewandten Seite bogenförmig weg von der Ebene (184) der Auslassöffnung (168) und anschließend in Richtung auf die Auslassöffnung (168) verläuft.

3. Trocknungsvorrichtung nach einem der voranstehenden Ansprüche, **dadurch gekennzeichnet, dass** der Querschnitt des Strömungskanals (166) im Bereich des Strömungsumlenkelementes (186) konstant oder im Wesentlichen konstant ist.

4. Trocknungsvorrichtung nach einem der voranstehenden Ansprüche, **dadurch gekennzeichnet, dass** der mindestens eine Düsenkörper (140) in sich von der mindestens einen Gebläseeinrichtung (138) wegweisender Richtung einen den Strömungskanal (166) einfassenden Führungsabschnitt (194) und einen vom Führungsabschnitt (194) abstehenden Auslassabschnitt (196) umfasst, der die Auslassöffnung (168) bildet.

5. Trocknungsvorrichtung nach Anspruch 4, **dadurch gekennzeichnet, dass** der Führungsabschnitt (194) über seine Erstreckung zumindest abschnittsweise und insbesondere vollständig einen runden Querschnitt aufweist und/oder dass der Auslassabschnitt (196) im Querschnitt trichterförmig ausgebildet ist.

6. Trocknungsvorrichtung nach Anspruch 4 oder 5, **dadurch gekennzeichnet, dass** ein Verhältnis einer Höhe (202) des Führungsabschnitts (194) zu einer Breite (204) des Führungsabschnitts (194) in einer von der mindestens einen Gebläseeinrichtung (138) wegweisenden Richtung zunimmt und insbesondere kontinuierlich zunimmt oder dass das Verhältnis konstant ist.

7. Trocknungsvorrichtung nach einem der voranstehenden Ansprüche, **dadurch gekennzeichnet, dass** der Strömungskanal (166) in von der mindestens einen Gebläseeinrichtung (138) wegweisender Richtung in mindestens eine Raumrichtung (188, 190) eine Querschnittsverengung umfasst, vorzugsweise in zwei senkrecht zueinander ausgerichteten Raumrichtungen (188, 190).

8. Trocknungsvorrichtung nach einem der voranstehenden Ansprüche, **dadurch gekennzeichnet, dass** zumindest eines der Folgenden gilt:
- eine Breite der Auslassöffnung (168) an einer der mindestens einen Gebläseeinrichtung (138) abgewandten Seite (192) ist kleiner als an einer der Gebläseeinrichtung (138) zugewandten Seite;
- die Auslassöffnung (168) umfasst angrenzend an das Strömungsumlenkelement (186) in Draufsicht einen dreieckförmigen oder keilförmigen Abschnitt (200).

9. Trocknungsvorrichtung nach einem der voranstehenden Ansprüche, **dadurch gekennzeichnet, dass** zumindest eines der Folgenden gilt:
- die mindestens eine Gebläseeinrichtung (138) umfasst ein Radialgebläse mit einem um eine Drehachse (154) drehbaren Gebläserad (150) und einer relativ zur Drehachse (154) versetzten Gebläseauslassöffnung (158) und die Ebene (184) der Auslassöffnung (168) ist auf derselben Seite wie die Gebläseauslassöffnung (158) relativ zur Drehachse (154) versetzt angeordnet, insbesondere oberhalb der Drehachse (154);
- die mindestens eine Gebläseeinrichtung (138) umfasst ein Radialgebläse mit einem um eine Drehachse drehbaren Gebläserad (150) und einer relativ zur Drehachse (154) versetzten Gebläseauslassöffnung (158) und die Ebene der Auslassöffnung (168) fluchtet im Wesentlichen mit einer Wandung (178) der Gebläseauslassöffnung (158), die der Drehachse (154) zugewandt ist.

10. Trocknungsvorrichtung nach einem der voranstehenden Ansprüche, **dadurch gekennzeichnet, dass** der mindestens eine Düsenkörper (140) ein erstes Düsenkörperteil (170) und ein zweites Düsenkörperteil (172) umfasst, die an einander zugewandten Stirnseiten (176) aneinandergefügt sind und den Strömungskanal (166) zwischen sich definieren, wobei die Düsenkörperteile (170, 172) vorzugsweise Halbschalen (174) sind.

11. Trocknungsvorrichtung nach einem der voranstehenden Ansprüche, **dadurch gekennzeichnet, dass** die Trocknungsvorrichtung zwei Gebläseeinrichtungen (138) und zwei Düsenkörper (140) umfasst und dass einer jeweiligen Gebläseeinrichtung (138) ein Düsenkörper (140) zugeordnet ist, wobei die Gebläseeinrichtungen (138) insbesondere auf einander abgewandten Seiten der Trocknungsvorrichtung angeordnet und die Düsenkörper (140) zwischen den Gebläseeinrichtungen (138) positioniert sind.

12. Trocknungsvorrichtung nach einem der voranstehenden Ansprüche, **dadurch gekennzeichnet, dass** der mindestens eine Düsenkörper (140) um eine Drehachse (182) drehbar ausgestaltet ist und dass die Trocknungsvorrichtung eine am mindestens einen Düsenkörper (140) angreifende Verstelleinrichtung (206) umfasst.

13. Trocknungsvorrichtung nach Anspruch 12, **dadurch gekennzeichnet, dass** der mindestens eine Düsenkörper (140) an der mindestens einen Gebläseeinrichtung (138) oder an einem daran angeordneten Anschlusselement (160), das von der Trocknungsluft durchströmbar ist, drehbar gelagert ist.

14. Trocknungsvorrichtung nach Anspruch 12 oder 13, **dadurch gekennzeichnet, dass** die Trocknungsvorrichtung eine Trageinrichtung (136) aufweist, an der die Verstelleinrichtung (206) an einer der Gebläseeinrichtung (138) abgewandten Seite (192) festgelegt ist und die direkt oder indirekt insbesondere an einem der Gebläseeinrichtung (138) abgewandten Seite (192) angreift, vorzugsweise dass die mindestens eine Gebläseeinrichtung (138) an der Trageinrichtung (136) festgelegt ist.

15. Trocknungsvorrichtung nach einem der Ansprüche 12 bis 14, **dadurch gekennzeichnet, dass** zumindest eines der Folgenden gilt:
- die Verstelleinrichtung (206) ist eine elektrische Verstelleinrichtung und umfasst einen Antriebsmotor (132, 152, 232) zum Antrieb eines Antriebsrades (234), das ein mit dem Drehkörper vorzugsweise fest verbundenes Antriebselement (238) direkt oder über ein Getriebe (236) antreibt;
- die Verstelleinrichtung (206) ist eine pneumatische oder hydraulische Verstelleinrichtung und umfasst ein Kolben-Zylinder-Aggregat (208), das am Drehkörper direkt oder über mindestens ein Kopplungselement (212, 216) angreift.

16. Trocknungsvorrichtung nach einem der Ansprüche 12 bis 15, **dadurch gekennzeichnet, dass** die Düseneinrichtung zwei Düsenkörper (140) umfasst, die miteinander drehfest zur Verdrehung um die Drehachse (182) verbunden sind und mittels der Verstelleinrichtung (206) gemeinsam um die Drehachse (182) drehbar sind.

17. Fahrzeugbehandlungsanlage (100), insbesondere Fahrzeugwaschanlage (102), umfassend mindestens eine Trocknungsvorrichtung nach einem der voranstehenden Ansprüche, die insbesondere als Dachtrocknungsvorrichtung (126, 230) ausgebildet ist.
